# EUROPEAN PATENT APPLICATION

(11) **EP 4 851 951 A1**
(43) Date of publication of application: **09.12.2026**
(21) Application number: 25181161.8
(22) Date of filing: 05.06.2025
(51) Int. Cl.: G06V 10/82, G06V 40/10

(54) **OBJECT REPRESENTATION PREDICTION MACHINE LEARNING MODEL**

(71) Applicant: Imec VZW, 3001 Leuven (BE); Vrije Universiteit Brussel, 1050 Brussel (BE); Katholieke Universiteit Leuven KU Leuven Research & Development, 3000 Leuven (BE)
(72) Inventor: Roshandel, Nima, 3000 Leuven (BE); Scholz, Constantin, 1050 Brussel (BE); Vanderborght, Bram, 3001 Leuven (BE)
(74) Representative: Ipsilon Belgium

(57) **Abstract**

A computer-implemented method (1) for training an object representation prediction machine learning model (160) for estimating a keypoint representation (170) of an object that is adapted to be in motion, comprising: obtaining a training data set comprising at least one radar signal acquired at a set of time instances, comprising information indicative of a radar reflectivity of the object; extracting, by the first neural network (401), features from the at least one radar signal; estimating, by the second neural network (402), sets of keypoints from the features; determining, for each time window, a set of training errors; weighting the sets of training errors using first weights in function of a radar reflectivity of a part corresponding to the respective estimated keypoint, thereby obtaining weighted training errors; and jointly training the first and second neural networks with the training data set by optimising a loss in function of the weighted training errors.

## Description

### Technical field

The present invention generally relates to a computer-implemented method for training an object representation prediction machine learning model, a computer-implemented method for estimating a keypoint representation of an object, an object representation prediction device, a dataset processing system for carrying out a computer-implemented method and a computer-readable medium for carrying out a computer-implemented method.

### Background

Within the domain of image processing, object recognition is a well-known task dedicated to finding one or more objects in an image, e.g. segmentation. Object representation prediction is a similar task that comprises identifying an object in more detail. Object representation prediction comprises obtaining an object representation, e.g. a keypoint representation, of an object. Object representation prediction may be performed in a great variety of applications, e.g. industrial applications, aerospace, or medical imaging.

Object representation prediction is usually performed on a camera image captured by a camera using a light sensor. Performing object representation prediction on such an image may have the following drawbacks. A quality of light-based images may depend on external circumstances, such as illumination conditions, due to the capturing using a light sensor. Illumination is often an external circumstance which cannot be entirely controlled during image capturing. As a result, object representation prediction performed on light-based captured images may have limited accuracy. In addition, such images capture a visual outlook of an environment, including places, faces et cetera, which may lead to privacy issues. Also, a light-based camera may not always be available to obtain images, depending on the application.

Due to the above-mentioned drawbacks, one can rely on performing object representation prediction on other types of images, such as images captured using a radar sensor. Radar-based images are more robust in terms of susceptibility to external circumstances and may be regarded as a less intrusive image capturing technology.

However, performing object representation prediction on a radar image is limited by a radar reflectivity of a captured object. Due to variations in radar reflectivity of different parts of a single object, it remains difficult to provide a detailed representation of an object with a high accuracy.

Additionally, radar sensors are known to have a relatively low angular resolution and may therefore not be able to capture fine details. As a result, an image obtained by a radar system may have a quality that may be significantly lower than a light-based camera image.

### Summary

It remains challenging to provide an object representation prediction technique that allows obtaining a highly accurate and detailed representation of an object from a radar-based image.

The present invention aims to alleviate at least some of the above-mentioned obstacles.

According to some aspects, there is provided the subject matter of the independent claims. Some further aspects are defined in the dependent claims.

The scope of protection sought for various embodiments of the invention is set out by the independent claims.

Embodiments and features described in this specification that do not fall within the scope of the independent claims, if any, are to be interpreted as examples useful for understanding various embodiments of the invention.

According to a first aspect, there is provided a computer-implemented method for training an object representation prediction machine learning model for estimating a keypoint representation of an object that is adapted to be in motion, the object representation prediction machine learning model comprising:
- a first neural network configured to extract a feature from at least one radar signal acquired at a given time instance;
- a second neural network configured to perform a regression analysis on features corresponding to time instances within a time window comprising the given time instance to estimate a set of keypoints characterising the keypoint representation, wherein the keypoints of the set of keypoints correspond to respective parts of the object; and
wherein the computer-implemented method comprises:
- obtaining a training data set comprising:
   - for each time instance of a set of time instances, at least one radar signal acquired at said time instance, wherein the at least one radar signal comprises information indicative of a radar reflectivity of the object;
   - for each time window of a set of time windows, a corresponding set of ground-truth keypoints, wherein each time window comprises a plurality of time instances of the set of time instances;
   wherein, for each respective time window, the radar signals acquired during said time window are associated with the set of ground-truth keypoints corresponding to said time window, thereby obtaining the training data set;
   - extracting, by the first neural network, for each respective time instance, a feature from the respective at least one radar signal;
   - estimating, by the second neural network, for each respective time window, a set of keypoints from the respective features, thereby obtaining estimated keypoints characterising the keypoint representation;
   - determining, for each of the time windows, a set of training errors, wherein a training error comprises a difference between an estimated keypoint and the corresponding ground-truth keypoint;
   - weighting the sets of training errors using first weights, wherein a training error is weighted in function of a radar reflectivity of a part corresponding to the respective estimated keypoint, thereby obtaining weighted training errors; and
   - jointly training the first and second neural networks with the training data set by optimising a loss in function of the weighted training errors.

By applying a machine learning approach comprising a mix of spatial and temporal feature extraction, limitations inherent to radar sensors may be overcome, in particular in dynamic environments. By further weighting a training error in function of a radar reflectivity, an accurate and detailed keypoint representation of an object can be obtained, regardless of a low radar reflectivity in one or more regions of the object.

The computer-implemented method according to the first aspect allows obtaining a keypoint representation of an object that may or may not be in motion. The keypoint representation comprises a plurality of keypoints of the object. A keypoint may, for example, coincide with a vertex of the object. A keypoint may, for example, coincide with a gravitational centre of the object. According to the method, an object representation prediction, i.e. estimation, machine learning model is trained to operate on radar data, which may comprise any type of radar signals, e.g. raw radar data or pre-processed radar data, such as a point cloud.

The trained object representation prediction machine learning model is able to extract a keypoint representation from a set of radar signals obtained at different time instances. A first neural network of the object representation prediction machine learning model focuses on obtaining spatial information from one or more radar signals obtained at one point in time. As such, the first neural network extracts a spatial feature at each time instance of the set of radar signals. A second neural network focuses on obtaining temporal information over various time instances from different spatial features extracted by the first neural network. Thus, the first neural network operates on data acquired at one point in time, while the second neural network operates on data acquired at multiple points in time.

The training is performed on a training data set comprising radar data acquired at a set of time instances, i.e. at different time instances. Within the set of time instances, a set of time windows can be defined by grouping the time instances. The time windows of the set of time windows may be equally long. Alternatively, the time windows of the set of time windows may have a different length, i.e. training can be performed on mixed-length time windows. Different lengths may, for example, be handled by applying one or more of the following techniques: padding, masking, or smart batching. Padding comprises filling up the time windows to a maximal time window length using zeros or other values. For example, padding may be zero-padding, reflect-padding, constant padding, or other types of padding. Masking comprises applying a mask to the time windows, wherein the mask has a length equal to a maximal time window length and is configured to indicate which time instances within a time window are to be ignored, if any. Padding and masking may advantageously be combined. Smart batching comprises rearranging data over time windows to obtain similar effective time window lengths, which results in a reduced need for padding. The radar data is labelled per time window with a ground-truth keypoint representation.

The training process comprises feeding one or more radar signals to the first neural network per time instance and obtaining the extracted features. Features extracted by the first neural network from time instances within a same time window are further processed together, i.e. as a batch. In other words, the extracted features are fed to the second neural network per time window instead of per time instance. The second neural network processes the extracted features per batch, i.e. set, of time instances within a time window to obtain an estimated set of keypoints per time window.

During training, a loss function is optimised. Parameters of the first and second neural networks are updated over many iterations so as to optimise said loss function. For example, a total training error calculated over all training errors of all estimated keypoints is minimised. The method comprises attributing first weights to the training errors. The first weights weight the training errors according to a radar reflectivity of the object. For example, the first weights may apply an increased penalisation to regions, e.g. parts, of the object that have a poor radar reflectivity. A region is an area on a surface of the object. By increasing the first weights of low-reflectivity keypoints, the first and second neural networks are taught that it is more important to accurately estimate such keypoints.

A radar reflectivity quantifies an amount of radar energy that is returned from the object. Radar reflectivity may be expressed in sextic millimetres per cubic meter, mm⁶/m³, or may be expressed in a unit of decibel-Z, dBZ.

The computer-implemented method according to the first aspect is based on radar signals, which brings a number of advantages. Firstly, radar-based sensors are more robust than light-based sensors with regard to illumination and weather conditions. For example, a dark environment, e.g. during a night time, or overly bright lighting may cause difficult illumination conditions. Heavy rain, fog, smoke, e.g. resulting from fire or from welding, or other conditions may also make images obtained with a light-based sensor unsuitable for object representation prediction. Secondly, radar allows detection in a broader angular range of the environment compared to light-based image acquisition. Thirdly, by using radar signals, persons and other objects sensitive to privacy issues cannot be recognised. For example, no facial recognition is possible, thereby preserving anonymity and protecting identities. This may be particularly relevant in the light of the General Data Protection Regulation, also referred to as GDPR.

Radar signals are limited by an angular resolution of a radar sensor used for capturing the radar signals. An angular resolution is a minimum angular separation, between two equally large targets at a same range, which can be distinguished, i.e. separated from each other, by the sensor. Due to the limited angular resolution of radar sensors, it remains challenging to obtain a detailed keypoint representation having more than one keypoint. This may be required in various applications where single-keypoint tracking does not provide sufficient information to perform a task. Accuracy is further limited by a low radar reflectivity of certain regions on objects. This may lead to missed keypoints or inaccurate keypoint estimates. The computer-implemented method according to the first aspect solves these issues by training a machine learning model comprising first and second neural networks. The limited accuracy resulting from the low angular resolution may be overcome by learning temporal information by the second neural network.

In addition, the model trained using the method is able to predict, i.e. infer, a keypoint representation based on radar signals obtained using only one radar sensor. Inference performed by the trained model requires only limited processing resources, which can be installed locally on a device. This results in a short calculation latency and an increased efficiency. Furthermore, a need for applying radar-reflective items on the object to allow low-reflectivity regions to be accurately detected is mitigated.

The computer-implemented method according to the first aspect may be particularly advantageous in robotic applications due to its short inference time as well its ability to provide a detailed keypoint representation. The method can, for example, be used for safely controlling an actuator, e.g. of a robot. The method may allow an actuator to continue its operation without interruptions, while avoiding collisions with objects in a robot operational space. For example, the method may allow an actuator to slow down when coming closer to an object, instead of stopping operation entirely. As such, this may further increase a productivity of the actuator. The detailed keypoint representation also allows dynamically adapting a trajectory of an actuator. The actuator may, for example, first complete another task when a human stands in the way, further adding to the productivity. In addition, the computer-implemented method allows an actuator to be placed close to objects, thereby allowing a more efficient use of available space. The computer-implemented method may be particularly advantageous in a robot-human setting, wherein an actuator needs to comply with strict safety requirements to guarantee human safety. Thereby, the computer-implemented method allows mitigating a need for operating in a cage.

According to further example embodiments, the training data set comprises radar signals acquired from objects of a same category as the object.

The category of the object may be a class, type, nature, kind, sort, or variety of the object. For example, a category may be: humans, robots, animals, four-legged animals, sheep, birds, poultry, cattle, et cetera.

Matching a category of objects captured by radar signals of the training data set to a category of a to be detected object allows obtaining a highly performant model.

According to further example embodiments, the object is a human and the parts are human body parts.
According to further embodiments, the object is a humanoid robot and the parts are human-like body parts.
Arms, hands and legs may have a low radar reflectivity and may be attributed a higher first weight. When the object is a human or a humanoid robot, the keypoint representation may correspond to a pose of the human or the humanoid robot. A pose comprises an orientation and arrangement of the parts of a human, or human-like, body as a whole. The pose of a human can be characterised by a keypoint representation of said human. One or more keypoints may, for example, correspond to a human joint. By estimating the set of keypoints, an alignment and angles of limbs and/or joints with respect to each other can be characterised. In a further analysis, this information may be associated to emotions, attitudes, or states of the corresponding person.

According to further example embodiments, obtaining the training data set further comprises:
- receiving a set of camera images of the object corresponding to the set of time instances such that the radar signals of the training data set at the respective time instances are synchronised with the camera images; and
- determining the sets of ground-truth keypoints based on the set of camera images.

The camera images are images obtained by a camera having a light-based or infrared-based sensor, such as a charge-coupled device, CCD, sensor, or a complementary metal-oxide semiconductor, CMOS, sensor. Such a camera may, for example be a red-green-blue-depth, RGBD, camera. By using RGBD data to determine the ground-truth, the keypoint representation estimation can operate accurately. Additionally, inference can be done on radar data, i.e. without the use of additional sensors, while the learning process includes light-based information. This combination of data originating from different image acquisition methods makes the model more robust.

According to further example embodiments, each of the at least one radar signal comprises at least time delay data.

According to further example embodiments, the radar signals comprise one or more of: time delay data, frequency shift data, and direction data, e.g. angle of arrival, AoA, data.

Time delay data may also be referred to as ranging data. Frequency shift data may also be referred to as Doppler data. AoA information allows deriving a direction from which a received signal was transmitted.

The radar signals may, for example, be obtained by applying Frequency-Modulated Continuous-Wave, FMCW, radar technology. FMCW comprises varying a frequency of an emitted radar signal over time. As a result, a corresponding received radar signal comprises delay information as well as frequency shift information. This allows determining both a distance and a velocity of objects in the environment.

The radar signals may, for example, be three-dimensional, 3D, point clouds. A point cloud is a collection of 3D points in space that can be obtained based on raw radar data. Thus, a point cloud is a 3D map based on radar data.

According to further example embodiments, a training error of a keypoint corresponding to a first part of the object having a lower radar reflectivity than a second part of the object is attributed a heavier first weight than training errors of keypoints corresponding to the second part.

In other words, the method may further comprise further attributing a heavier first weight to a training error of a keypoint corresponding to the first part than to training errors of keypoints corresponding to the second part.

By attributing higher first weights to lower reflectivity regions, errors in these regions are penalised more severely. This ensures that the object representation prediction model focuses on predicting keypoints in such regions with a higher accuracy. As a result, the trained model is able to better predict low-reflectivity keypoints, resulting in an overall improved keypoint representation prediction.

A part of the object may, for example, be a portion, a component, or a member of the object. A member of the object may, for example, be an arm or a leg of a human or of a robot. The part may be an especially distinctive part of the object and may be distinguishable based on radar reflectivity.

Various methods may be applied to distinguish between keypoints with low and high reflectivity. For example, the weighting may be performed based on areas known to have a particularly lower radar reflectivity than other areas of the object. For example, based on known properties of the object, e.g. certain keypoints may be weighted based on their position on the object. Additionally, or alternatively, the weighting may be performed based on a measured radar reflectivity value at a location on the object corresponding to a keypoint. Such a measured radar reflectivity value may be an amplitude value of a received radar signal. If the signal has an amplitude below a threshold, e.g. an average reflectivity amplitude of all signals, it may be considered to have a low reflectivity. The distinguishing may be performed before processing the raw radar data, for example before creating a point cloud based on the raw radar data.

The first weights may be discrete weights. For example, the impact of a training error for keypoints in a low-reflectivity region may be doubled by applying a first weight having a value of '2' to the first part and a first weight having a value of '1' to the second part of the object. More than two discrete levels of weights may be defined to distinguish between different levels of reflectivity. For example, the first weight may have three possible values: '1', '2' and '3'. A value of '1' may be attributed to keypoints in a high-reflectivity region comprising a higher radar reflectivity than the other regions of the object. A value of '2' may be attributed to keypoints in mid-reflectivity regions comprising a higher radar reflectivity than low-reflectivity regions and a lower radar reflectivity than the high-reflectivity region. A value of '3' may be attributed to keypoints in low-reflectivity areas comprising a lower radar reflectivity than the other regions of the object. For example, a range of received radar reflectivity values may, for example, be divided into subranges. For example, received radar reflectivity values may be in a range of [20, 50] decibel-Z, dBZ. The range may, for example, be divided into subintervals [20, 30] dBZ , (30, 40] dBZ and (40, 50] dBZ respectively representing a low, medium, and high reflectivity.

Alternatively, the first weights may approximate a continuous function applied over the set of keypoints to apply a smoother weighting.

According to further example embodiments, a training error of a keypoint corresponding to a faster part of the object moving at a higher velocity or acceleration than a slower part of the object is attributed a heavier first weight than training errors of keypoints corresponding to the slower part.

In other words, the method may further comprise attributing a heavier first weight to a training error of a keypoint corresponding to the faster part than to training errors of keypoints corresponding to the slower part.

Due to a faster movement, a keypoint on the faster part may be more difficult to estimate. By increasing the first weight corresponding to training errors of such a keypoint, the model emphasises an accuracy of such parts during training.

According to further example embodiments, a training error of a keypoint corresponding to a protruding part of the object extending substantially outwardly from the object is attributed a heavier first weight than training errors of keypoints corresponding to a part of the object from which the protruding part extends substantially outwardly.

In other words, the method may further comprise attributing a heavier first weight to a training error of a keypoint corresponding to the protruding part than to training errors of keypoints corresponding to other parts.

A protruding part, i.e. an outwardly extending part, is a part that sticks out from a main body of the object. Keypoints of protruding parts may be advantageously emphasised during training due to various reasons. Firstly, a keypoint on a protruding part may be more difficult to accurately estimate. This may be due to a separation from the rest of the object. In addition, protruding parts may be more important to accurately estimate in certain applications. For example, for pose estimation, it may be important to accurately know a position of an arm and/or a forearm and/or a position of an arm with respect to a forearm of a human.

According to further example embodiments, the computer-implemented method further comprises further weighting the sets of training errors using second weights, wherein a training error is weighted in function of an out-of-plane coordinate of the respective estimated keypoint with respect to a detection plane of the at least one received radar signal.

The detection plane is defined by an orientation of the radar sensor used for capturing the radar signals. The detection plane may be different for different radar signals. The detection plane may be referred to as an xy-plane, i.e. a plane comprising depths and widths in an environment with respect to a radar sensor. An out-of-plane coordinate is a coordinate along an out-of-plane axis perpendicular to the detection plane. The out-of-plane axis may be referred to as a z-axis, i.e. an axis comprising heights in an environment with respect to a radar sensor.

Thus, the method may further comprise further attributing second weights in function of the out-of-plane coordinate. By doing so, the training may be less biased as a result of outliers in the radar signals. In addition, the low angular radar resolution may be further overcome by the use of the out-of-plane weights in the loss function.

According to further example embodiments, a training error of a first keypoint having a first out-of-plane coordinate, is attributed a heavier second weight than a training error of a second keypoint having a second out-of-plane coordinate that is larger than the first out-of-plane coordinate.

In other words, the method may further comprise further attributing a heavier second weight to a keypoint having a smaller out-of-plane coordinate, in terms of absolute value, than another keypoint having a larger out-of-plane coordinate. For example, training errors may be weighted inversely proportional with the out-of-plane coordinate of the corresponding keypoint.

According to further example embodiments, the loss is a Huber loss.

The Huber loss is a loss function that is relatively insensitive to outliers compared to for example a mean squared error, MSE, loss function. Further, the Huber loss is differentiable over its entire range. These properties make the Huber loss a suitable loss function for training the object representation prediction machine learning model. By using the Huber loss, the susceptibility of radar signals to outliers becomes less impactful on the performance of the object representation prediction machine learning model. In addition, its differentiability allows for an efficient training.

By applying the first weights, the Huber loss is adapted to a custom Huber loss to provide the loss function for the training.

According to further example embodiments, the first neural network is configured to capture spatial information related to a shape of the object and the second neural network is configured to capture temporal information related to a change, e.g. a movement, of the object.

According to further example embodiments, the first neural network is a convolutional neural network, CNN, and, the second neural network is a recurrent neural network, RNN.

A CNN is a feedforward neural network comprising one or more convolutional layers configured to perform feature extraction. A convolutional layer is configured to perform a spatial convolution on a multidimensional data array, e.g. a result of a previous layer or the input data, sometimes referred to as a tensor. A spatial convolution comprises sliding a kernel, also referred to as a convolution filter, over a data array to construct a new data array by performing a scalar product at each location of the kernel. A kernel is a multidimensional array having dimensions smaller than dimensions of the data array it operates on and comprises a set of weights, also referred to as filter coefficients. The sliding of the kernel over the data array comprises moving the kernel each time by one or more positions before performing the next scalar product. A number of positions, e.g. image pixels, between the kernel locations may be referred to as a stride. Thus, a spatial convolution comprises locally weighting the data with the kernel coefficients at each kernel location. The result of a convolutional layer is a multidimensional data array having dimensions smaller than the original data array and may be referred to as a feature map. A feature map represents an extracted feature. The spatial convolution is a type of filtering that allows detecting properties, such as edges, textures, or patterns. Optionally, the spatial convolution may be a dilated convolution configured to perform a convolution while inserting zeros between kernel elements, thereby expanding a spatial view. Dilation, i.e. dilated convolution, may be performed depending on a dilation rate that characterises how and how many zeros are added.

A convolutional layer is further configured to perform an activation function, i.e. a non-linear function, after the convolution filtering. Examples of an activation function include: the Rectified Linear Unit, ReLU, function, the hyperbolic tangent, tanh, function and the sigmoid function. This allows learning more complex properties of the input data array.

A CNN may further comprise one or more pooling layers, for example provided between two convolutional layers. A pooling layer is configured to pool, i.e. down-sample, a multi-dimensional array, e.g. a feature map, to reduce a dimensionality of the array while retaining information to reduce a computational cost. For example, the pooling layer may be configured to perform down-sampling by selecting a maximum value within a sliding kernel, i.e. max pooling. Alternatively, the pooling layer may be configured to perform down-sampling by averaging the values within a sliding kernel, i.e. average pooling. Other possible pooling methods include: attention pooling, global average pooling and generalised mean pooling.

A CNN may further comprise at least one fully connected layer, i.e. a dense layer. In a fully connected layer, every neuron in the layer is connected to every neuron in a layer immediately preceding the fully connected layer.

According to further example embodiments, the CNN may be a three-dimensional, 3D, CNN configured to handle 3D input data. A 3D-CNN may be configured to perform 3D object representation prediction, i.e. able to recognise 3D objects.

An RNN is a neural network comprising one or more recurrent units. A recurrent unit is a storage element configured to keep a hidden state that is updated based on a new input and the previous hidden state. Contrarily to feedforward neural networks, an RNN comprises recurrent connections that feed a neuron output back to an input of the neuron to capture temporal information. By using a RNN, temporal information can be obtained in an efficient manner.

According to further example embodiments, the RNN is a gated recurrent unit, GRU, wherein a recurrent unit has a reset gate and an update gate. A reset gate is configured to control how much information is discarded during an update of the neural network. An update gate is configured to control which information is retained during an update of the neural network. A GRU comprising separate reset and update gates may be referred to as a fully gated GRU. Alternatively, a reset gate may be merged with an update gate to form a forget gate. A GRU comprising forget gates may be referred to as partially gated. A GRU is computationally efficient and requires only a limited amount of parameters, which may result in short calculation delays. A GRU may further provide temporal denoising.

According to further example embodiments, the RNN is a bidirectional RNN, BRNN. A BRNN is an RNN comprising recurrent connections back to neurons of a previous layer. This allows feeding back information of future images and to take it into account. This may allow obtaining a more accurate keypoint representation, since useful information from future images can be used for predictions. This may be particularly advantageous when sequences of images over time are fed to the BRNN during training due to continuous movements of the object. The more accurate keypoint representation may come at a cost of a higher inference time.

According to further example embodiments, the RNN comprises a long short-term memory, LSTM.

An LSTM is a special type of RNN that is configured to capture long-term dependencies in sequential data. An LSTM comprises memory cells, wherein a memory cell is a storage element that is configured to retain information over different time steps. The information within a memory cell at a given point in time may be referred to as a cell state. An LSTM may comprise, for each memory cell, one or more of: an input gate, a forget gate, and an output gate. An input gate is configured to control how much new information is provided to the memory cell during an update of the memory cell. A forget gate is configured to control which portion of information present in the memory cell is discarded during an update of the memory cell. An output gate is configured to control what information is provided to an output of the memory cell based on the information within the memory cell.

Optionally, the LSTM may be further configured to carry information across different time steps to assist in the selection of relevant information to retain. As such, memory cells can act as a long-term memory. Optionally, one or more memory cells may be configured to provide one or more hidden states comprising short-term information. As such, the LSTM may implement both a long-term memory, by means of the memory cells, as well as a short-term working memory by means of the hidden states to capture the more recent context. This allows taking both short-term information as well as long-term information into account when providing the output at a final layer, i.e. at an output layer of the LSTM.

According to further example embodiments, the LSTM is one of: a vanilla LSTM, a bidirectional LSTM, a stacked LSTM, an attention-based LSTM. Similar to a bidirectional LSTM, a stacked LSTM may achieve a higher accuracy at a cost of an increased inference time.

According to further example embodiments, the LSTM is a convolutional LSTM configured to learn both spatial and temporal features simultaneously. By providing the second neural network as a convolutional LSTM, the first neural network may be more simplified, for example comprise less layers. This may result in a shorter calculation delay depending on various aspects, such as an input size, a channel count and how much layers and neurons are saved. Thus, under certain circumstances, both a shorter training time and a shorter inference time may be achieved.

According to example embodiments, the LSTM is a stateless LSTM, which is an LSTM that is trained in a particular manner. Before training, the training data set is split into different batches of data. Training may be done by subsequently training the LSTM with each of the batches, i.e. in subsequent training phases. A stateless LSTM is an LSTM that is trained in batches, wherein an internal state of the LSTM is reset after each training batch. The internal state of the LSTM refers to a state of one or more memory cells and hidden states. Between several inference calls, the hidden stats between calls may also be reset. As such, the internal state is not transferred from one batch of radar data to the next during training or inference. This may improve a robustness of the training process. For example, data loading may be simplified since it does not require a fixed batch size. A stateful LSTM may, however, achieve an improved accuracy compared to a stateless LSTM due to the tracking of long-range context.

It is noted that training in batches as explained here may also be performed during training of the object representation prediction machine learning model more generally and is not limited to training of an LSTM.

According to further example embodiments, the computer-implemented method is further for further training a command recognition machine learning model for estimating a command indicated by the object, wherein the computer-implemented method further comprises:
- obtaining a command training data set comprising the radar signals of the training data set, wherein radar signals acquired at respective one or more time instances are further associated with a respective ground-truth command;
- estimating, by the command recognition machine learning model, for each said one or more time instances, a command from the respective radar signals, thereby obtaining estimated commands;
- determining, for each said one or more time instances, a command training error comprising a difference between an estimated command and the corresponding ground-truth command; and
- training the command recognition machine learning model with the command training data set in function of the command training errors.

In addition to the keypoint representation estimated by the object representation prediction machine learning model, the method may further provide training of an additional machine learning model configured to perform an additional task: command estimation. The training of both models may be performed in parallel, or may be performed sequentially. The training of the two models is performed jointly, i.e. using the same training radar data. Although jointly trained, after training the object representation prediction model and the command recognition model, the models can be inferred independently on new data. For example, the object representation prediction inference and the command recognition inference may be performed in parallel. The results thereof may be simultaneously visualised, e.g. on a display, to enhance a user's interpretation possibilities. This allows an interaction with the object without physical touch or direct control.

The issue of a limited angular resolution of a radar sensor persists more severely in the context of command estimation, since it may require detection of even finer details. A command is a static or dynamic arrangement of one or more parts of the object denoting a particular meaning. For example, a command may be the switching on of a light on the object. For example, a command may comprise a protruding part performing a certain movement. A command may also be referred to as motion command when it is related to a dynamic arrangement, i.e. movement, of the object. A gesture is a command performed by a person or an animal. A gesture may also be referred to as a motion gesture when it is related to a movement of the human or animal.

According to further example embodiments, the command recognition machine learning model may be any one of: a CNN, a transformer, any other type of support vector machine, SVM, model any other type of deep learning, DL model.

The method may further comprise attributing first weights to command training errors similarly to the training errors of the object representation prediction machine learning model.

According to example embodiments, the command recognition machine learning model is configured to estimate a gesture performed by a human or a robot. A gesture is a physical movement of part of a body, especially the hand or the head, that conveys a specific message, idea, or meaning, and often used to express emotions, commands, or other forms of non-verbal communication. For example, right-hand wave, left-hand wave

According to further example embodiments, the command recognition machine learning model is a random forest classifier model.

A random forest classifier model is configured to construct a plurality of decision trees during training. Each decision tree is configured to perform the same classification task. An estimation is done based on a majority voting of the trees. A decision tree is a predictive model comprising nodes, representing a test on one or more parameters of the data, and branches, representing an outcome of the tests. The decision trees are individually trained on different subsets based on the command training data. The different subsets may comprise a partitioning of the command training data set. Alternatively, different subsets may be obtained by applying bagging, also referred to as bootstrap aggregating. Bagging comprises obtaining multiple, smaller command training data sets by uniformly sampling with replacement from the command training data set. The random forest classifier model may implement random feature selection. Random feature selection comprises choosing a random subset of features to make splits in the different decision trees. Command estimations are made by combining the predictions of the individual trees. This results in reduced overfitting and more accurate estimations.

According to a second aspect, there is provided a trained machine learning model trained in accordance with the computer-implemented method of the first aspect.

Such a trained machine learning model may provide one or more of the above-mentioned advantages.

According to a third aspect, there is provided a computer-implemented method for estimating a keypoint representation of an object that is adapted to be in motion, wherein the computer-implemented method comprises:
- receiving a set of radar signals of the object, wherein the set of radar signals comprises, for each time instance within a time window, at least one radar signal acquired at said time instance, wherein the at least one radar signal comprises information indicative of a radar reflectivity of the object;
- extracting, by a first neural network, for each respective time instance within the time window, a feature from the at least one received radar signal; and
- performing, by a second neural network, a regression analysis on the features corresponding to the time instances within the time window to estimate a set of keypoints characterising the keypoint representation of the object;
wherein the first and second neural networks are jointly trained by the computer-implemented method according to any one of the preceding claims.

Such a computer-implemented method may provide one or more of the above-mentioned advantages. The computer-implemented method according to the third aspect is an inference method corresponding to the training method of the method according to the first aspect. The method according to the third aspect comprises inferring new data to estimate a keypoint representation of previously unseen data, i.e. distinct from the training data set.

According to further example embodiments, the computer-implemented method according to the third aspect is further for further estimating a command given by the object, the computer-implemented method further comprising:
- classifying, by a command recognition machine learning model, the radar signals acquired at one or more time instances within the time window of the human to estimate the command,
wherein the command recognition machine learning model is trained by the computer-implemented method for training a command recognition machine learning model.

This is an inference method corresponding to the training method of the method according to claim 8 or 9. The method comprises inferring new data to estimate a command from previously unseen data, i.e. distinct from the command training data set.

According to a fourth aspect, there is provided a dataset processing system comprising at least one processor and at least one memory including computer program code, the at least one memory and computer program code configured to, with the at least one processor, carry out the computer-implemented method according to the first aspect or the second aspect. Such a dataset processing system may provide one or more of the above-mentioned advantages.

According to a fifth aspect, there is provided a computer program, or a computer-readable medium, comprising instructions stored thereon for performing at least the computer-implemented method according to the first aspect or the second aspect. Such a computer-readable medium may provide one or more of the above-mentioned advantages.

According to a sixth aspect, there is provided a non-transitory computer-readable medium comprising program instructions that, when executed by an apparatus, cause the apparatus to perform at least the method according to the first aspect or the second aspect. Such a non-transitory computer-readable medium may provide one or more of the above-mentioned advantages.

According to a seventh aspect, there is provided an apparatus comprising:
- at least one processor; and
- at least one memory storing instructions that, when executed by the at least one processor, cause the apparatus at least to perform the computer-implemented method according to the first aspect or the second aspect.

According to an eighth aspect, there is provided an object representation prediction device comprising at least one trained object representation prediction machine learning model trained according to the computer-implemented method of the first aspect, wherein each of the at least one trained object representation prediction machine learning model is trained for estimating a keypoint representation of an object of a category by using a training data set comprising radar signals acquired from objects of the category, and wherein the object representation prediction device is configured to:
- control at least one actuator configured to move within an actuation area;
- obtain a set of radar signals, wherein the set of radar signals comprises, for each time instance within a time window, at least one radar signal acquired at said time instance, wherein the at least one radar signal comprises information indicative of a radar reflectivity of an object of a given category within the actuation area;
- estimate, from the set of radar signals, a keypoint representation of the object using the object representation prediction machine learning model trained for the given category; and
- instruct the at least one actuator to interact with the object in function of the estimated keypoint representation of the object.

Multiple machine learning models may be provided to track different types of objects. For example, the object representation prediction device may comprise one machine learning model trained for recognising chickens, i.e. trained using radar signals of chickens, and one machine learning model for recognising a pose of a human, i.e. trained using radar signals of humans. Alternatively, the object representation prediction device may comprise multiple machine learning models to track different entities of the same category. Such multiple machine learning models may operate in parallel. For example, five models to track five respective forklifts, wherein each model is trained on forklift radar data.

The object representation prediction device may be mounted on the at least one actuator, or may be provided separately from the actuator. The object representation prediction device be configured to communicate with the actuator, e.g. via a wired or via a wireless link. The at least one actuator may be a stand-alone actuator, or may be coupled with a larger device, e.g. a robot.

Due to the fast inference time provided by the trained object representation prediction machine learning model, the object representation prediction device may be able to locally perform inference. The object representation prediction device may comprise a radar sensor to perform object representation prediction in real-time. To this end, the object representation prediction device may comprise a circuitry, e.g. a neuromorphic circuitry, for inferring new radar input signals in real-time.

Optionally, the estimated keypoint representation may be visualised to be displayed via a visual interface.

According to further example embodiments, the object representation prediction device further comprises a trained command recognition machine learning model trained for estimating a command indicated by the object, the object representation prediction device being further configured to:
- estimate, from the set of radar signals, a command given by the object using the trained command recognition machine learning model; and
- instruct the at least one actuator to further interact with the object based on the estimated command of the object.

Optionally, the estimated command may be visualised on top of the estimated keypoint representation to be displayed via the visual interface.

### Brief Description of the Drawings

Fig. 1 illustrates a computer-implemented method for training an object representation prediction machine learning model according to example embodiments;
Fig. 2 illustrates steps of a computer-implemented method for training an object representation prediction machine learning model according to example embodiments according to example embodiments;
Fig. 3A illustrates a computer-implemented method for estimating a keypoint representation of an object that is adapted to be in motion according to example embodiments;
Fig. 3B illustrates a computer-implemented method for estimating a command given by an object according to example embodiments;
Fig. 4 illustrates a trained object representation prediction machine learning model according to example embodiments; and
Fig. 5 illustrates an example embodiment of a suitable computing system for performing object representation prediction.

### Detailed Description of Embodiment(s)

The present disclosure relates to machine learning in the domain of artificial intelligence, AI. An artificial neural network, ANN, also referred to as a neural network, NN, ANN model or NN model is a type of machine learning model. In particular, a neural network comprises a mathematical model that can be taught to perform a specific task. For example, in the domain of image processing, such a task may be image segmentation or image classification. For example, in the domain of digital audio, such a task may be speech recognition or speech-to-text conversion. Many other tasks may be solved by a NN, such as, for example, automated surveillance or providing a medical diagnosis.

A neural network is configured to perform computations on input data to generate output data so as to perform a certain task. For example, an NN may have a functionality of a classifier that classifies a picture into a category of 'animal type'. The input data may be a set of pixels of an image depicting an animal, and the corresponding output data may be an animal category, e.g. 'cat'. While a classifier is configured to predict a discrete variable, an NN may be configured to perform a regression analysis to predict one or more continuous variables.

A neural network model may comprise a set of neurons arranged in layers. The input layer is the first layer and performs computations on the input data and the output layer is the last layer, which generates the output data. Between the input layer and the output layer, one or more intermediate layers, also referred to as hidden layers, may be provided. Connections, also referred to as edges, synaptic edges, or synapses, are provided between neurons of different layers and optionally between neurons within a same layer. Each edge has a weight, also referred to as synaptic weight, associated to it. A weight defines a connectivity between two neurons of subsequent layers by quantifying a synaptic edge connecting the two neurons.

A neuron is characterised by a neuron model comprising a mathematical function that defines how to provide an output data value based on data on the input edges of the neuron. Such a mathematical function may, for example, comprise an activation function to be executed on a linear combination of the data along the input edges of the neuron. The linear combination is a weighted sum of the data along the input edges, i.e. data outputted by neurons of a previous layer, using the corresponding synaptic weights. The activation function is usually a non-linear function, e.g. a rectifier, ReLU, function, or a leaky ReLU function. A neuro-synaptic operation is an operation performed by a neuron of a neural network. Performing a neuro-synaptic operation by a neuron may also be referred to as so-called 'firing' of the neuron. A neuro-synaptic operation may, for example, comprise computing a linear combination of data inputs using synaptic weights and subsequently applying an activation function.

Different types of ANNs exist based on a way that neurons are interconnected, i.e. based on how edges are provided, and based on a neuron model of the neurons. Examples of different types of ANNs include, but are not limited to: a convolutional neural network, CNN, a spike neural network, SNN, a feedforward neural network, FNN, and a recurrent neural network, RNN. An ANN may be a deep neural network, DNN, meaning of a high complexity, i.e. having a relatively large number of neurons and/or edges and at least a few hidden layers.

Before a neural network can be used for calculations on new input data, weights in the NN need to be tuned so as to solve the task at hand. The process of adjusting the weights for performing a specific task, i.e. before the NN can be actually used, is referred to as training. To this end, so-called training data is fed to the neural network. A training data set usually comprises labelled training input-output data pairs. During training, the training output data is considered the 'ground truth', i.e. correct, output for the corresponding training input data. By providing labelled data, the training is a way of supervised learning. As such, the training output data allows calculating how far off a generated output is from the labelled, i.e. desired, output. The weights can then be updated to improve the prediction. As such, the NN is taught how to generate outputs. This is usually performed in an iterative manner, wherein in each iteration the weights are updated such that the NN is able to better perform the task. The updating of the weights is performed based on a loss defined in function of training errors. As such, in each iteration, the loss becomes smaller for the training data set. The loss may, for example, be a mean square error, MSE, mean absolute error, or a cross-entropy loss. Optionally, during training, learnable attention weights are added to focus on the most relevant aspects of the training data during the training process.

To improve the training process, validation may be performed to evaluate a performance of the trained NN. Validation comprises feeding the trained NN with a validation data set, comprising labelled data similar to the training data set but not used during training. Subsequently, one or more validation parameters that represent the performance can be determined. The process of training and validation may be efficiently combined, for example by applying K-fold cross-validation, wherein K is a natural number larger than 1. K-fold cross-validation is a resampling technique comprising partitioning the training data set into K equal-sized training data subsets, i.e. folds. The NN is then trained on K-1 folds and subsequently validated on the remaining fold. This process can be repeated K times, each time using a different fold for the validation. By doing this, each data point is used both for training and validation.

The process of using the NN after completion of the training phase, may be referred to as inference. During inference, new input data of which corresponding output data is unknown, is fed to the NN. Inferring new input data by the NN means applying new input data to the NN, for which no corresponding 'ground-truth' output data is available. Optionally, inference may include applying attention weights if used during training.

Aspects of the present disclosure may be applied in a great variety of applications. One such application may, for example, be the use of automated devices in industrial manufacturing. The figures will be explained within the context of this example application for a clear description. It is noted that this does not restrict the scope of this disclosure to only these types of applications. Other possible applications may, for example, include: monitoring in various fields, agricultural applications such as animal farming, service industries, human-robot interaction in other contexts than manufacturing, such as healthcare or aerospace. For example, relevant healthcare applications may include: fall detection, and recovery assistance. As another example, in biomechanics, a trained object representation prediction model may be used to analyse movements in sports, for example jumping mechanics in basketball. In security applications, the model may be used to detect an intruder in a way that is unaffected by environmental factors, such as smoke.

In an automated manufacturing environment, an actuator may be configured to operate within an actuation zone covering a reach of the actuator. Such an actuator may, for example, be provided on a robotic device. The actuation zone around an actuator may be accessible to other objects. Objects may be static or dynamic. A dynamic object may, for example, be configured to move by itself, or may be configured to be moveable. Objects may, for example, include one or more of the following: other automated devices, humans, animals, boxes, pallets for stacking boxes, racks, shelves, walls, conveyors, et cetera.

For safety reasons, the actuator needs to be controlled in such a way as to avoid collisions with objects. This may be particularly challenging when an object moves at a high velocity. Such a high velocity may, for example, be 2 metres per seconds, m/s, which is human movement speed as defined by certain standards. Such a high velocity may, for example, be 5 m/s, which is a robot actuator movement speed according to certain standards. To this end, a trained object representation prediction model according to example embodiments may be used to track objects in a vicinity of an actuator, e.g. including the actuation zone, moving at speeds up to and higher than 5 m/s.

Further, privacy issues may arise from using images acquired by a camera with a light-based or infrared, IR, sensor. In industrial manufacturing, light-based cameras may, for example, be an issue in the light of protecting trade secrets. Further, as soon as an image comprises a human, e.g. an employee in a production hall, privacy issues may become even more sensitive. This is solved by making use of radar signals instead. Radar signals may be captured by one or more radar antennas. Radar refers to radio detecting and ranging. Radar comprises using an electromagnetic sensor, e.g. an electromagnetic transceiver, for detecting, locating, tracking, and recognising objects in the surroundings. Radar operates by transmitting electromagnetic energy toward objects, and observing reflected echo signals.

Besides resolving safety and privacy issues, the ability to extract a detailed representation further overcomes a need for special reflective means to be applied to objects. Use of radar reflectors may be tedious and inefficient. Special clothing comprising radar reflectors may also cause discomfort when worn by a human.

A specific use case involves human-robot environments. In such a context, safety is of the utmost importance. In addition, human-robot interaction may be implemented, wherein an actuator may operate based on an interpreted pose or gesture of a human. Thanks to improved object representation prediction capabilities provided by the present disclosure, a safer and more intuitive collaboration can be achieved, for example by a device according to the eighth aspect. In particular obtaining a multi-point keypoint representation may be especially useful since it allows a more detailed and accurate modelling of objects. This may allow boundaries of an object to be better localised and may therefore prevent collisions with an increased certainty. In addition, the detailed keypoint representation allows obtaining directions given by a human in real-time.

By relying only on radar images during inference, the present disclosure may be compliant with a speed and separation monitoring, SSM, algorithm to control the speed of an actuator according to known standards. An SSM algorithm is configured to safeguard safety by maintaining a predetermined minimum distance with objects in the environment during operation. For example, such a standard may be the International Organisation for Standardisation, ISO, norms ISO 10218-2 or ISO 15066 so that the robot slows down or stops depending on an operator's proximity.

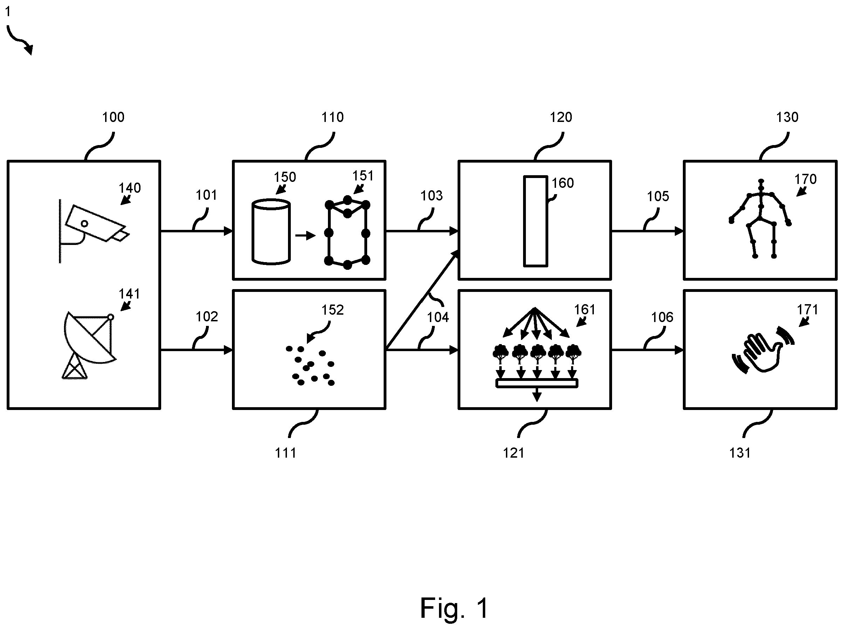

Figure 1 shows a computer-implemented method 1 for training an object representation prediction machine learning model 160 for estimating a keypoint representation 170 of an object that is adapted to be in motion. For example, the set of keypoints may comprise a 3-by-N matrix, comprising three coordinates per keypoint, wherein the set of keypoints comprises N keypoints. N is a natural number larger than one and may, for example, be equal to 19. In the example of Figure 1, the object is a human and the keypoint representation 170 characterises a pose of the human. The keypoints 170 may correspond to the following body parts: head, middle of the neck, collar, torso, waist, left and right shoulder, left and right elbow, left and right wrist, left and right hand, left and right hip, left and right knee, and, left and right ankle.

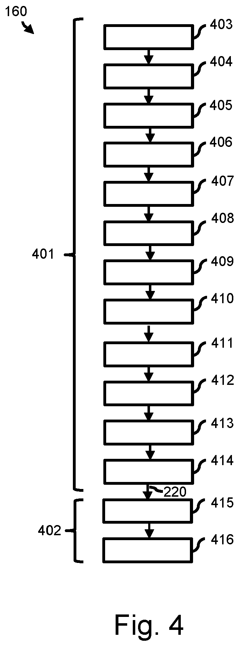

An example of the object representation prediction machine learning model 160 is illustrated in Figure 4.

The object representation prediction machine learning model 160 comprises a first neural network 401 configured to extract a feature from at least one radar signal acquired at a given time instance. The first neural network 401 comprises a first convolutional layer 403 configured to perform a first spatial convolution on at least one radar signal to extract a first feature map. Next, a batch normalisation layer 404 is provided between layer 403 and a second convolutional layer 405 to normalise the first feature map. Layer 405 extracts a second feature map. The first neural network 401 further comprises a max pooling layer 406, followed by a third convolutional layer 407 configured to extract a third feature map. Another max pooling layer 408 and fourth convolutional layer 409 are provided to extract a fourth feature map. A final max pooling layer 410 is provided, as well as a flattening layer 411 configured to reshape the dimensions of the feature map. After the flattening, a fully-connected layer 412 is provided. Two optional dropout layers 413, 414 are configured to deactivate random neurons during training to prevent overfitting. The layers 413, 414 are not used, i.e. bypassed, during inference. Thus, the first neural network 401 may comprise four convolutional layers. An output 220 of the first neural network 401 is a spatial feature.

The object representation prediction machine learning model 160 further comprises a second neural network 402 configured to perform a regression analysis on features corresponding to time instances within a time window comprising the given time instance to estimate a set of keypoints characterising the keypoint representation. The second neural network 402 may comprise an LSTM 415 followed by a fully-connected layer 416. The fully-connected layer 416 is the output layer of the object representation prediction machine learning model 160 and provides a set of keypoints corresponding to respective parts of the object.

Returning to Figure 1, a step 100 of data acquisition is illustrated.

Using at least one radar sensor 141, radar signals are acquired. Although illustrated schematically, the radar sensor 141 may be a very small sensor, for example, a IWR6843AOPEVM 60 gigahertz, GHz, mmWave sensor chip comprising a radar antenna. The radar sensor 141 may, for example, be configured to operate within a 60-64 GHz frequency range and to obtain FMCW radar data.

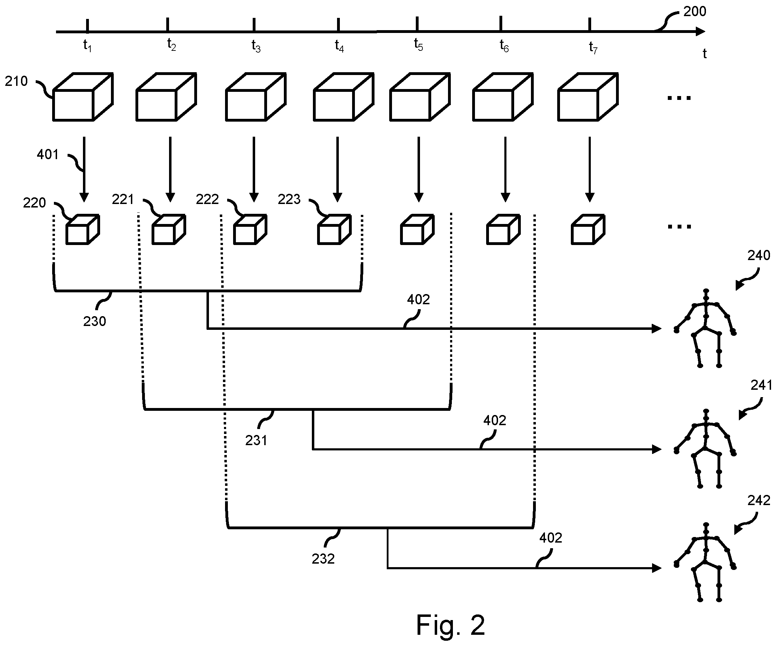

As illustrated in Figure 2, at least one radar signal is acquired at each time instance of a set of time instances illustrated on time axis 200. The set of time instances comprises time instances t₁, t₂, t₃, t₄, t₅, t₆, and t₇. At each time instance of the set of time instances, one or more radar signals are acquired. The one or more radar signals at time instance t₁ are bundled in a multi-dimensional array 210. Analogous multi-dimensional arrays are also illustrated for the other time instances t₂, t₃, t₄, t₅, t₆, and t₇. Each at least one radar signal 210 comprises information indicative of a radar reflectivity of the object. The training data set for the object representation prediction machine learning model comprises the at least one radar signals 210 acquired at the set of time instances t₁, t₂, t₃, t₄, t₅, t₆, and t₇.

Further, the time instances are grouped into time windows of a set of time windows 230, 231, 232. Each time window 230-232 comprises a plurality of time instances of the set of time instances. For example, time window 230 comprises time instances t₁, t₂, t₃, and t₄. Time window 231 comprises time instances t₂, t₃, t₄, and t₅. Time window 232 comprises time instances t₃, t₄, t₅, and t₆. The time windows are constructed using a sliding window of four time instances for illustrative purposes. However, it is noted that the time windows may be obtained using any other type of grouping, i.e. may combine data of an object that was not acquired in one go. A length of the time window may be chosen based on a frequency of the radar sensor and a real-time throughput frequency, expressed in frame per seconds. A larger time window cause a slower processing time but may result in an improved accuracy.

It is noted that other time windows, e.g. having a time window length different from four, can be selected based on the set of time instances t₁, t₂, t₃, t₄, t₅, t₆, t₇. For example, when applying a time window length of three, a first time window may have time instances t₁, t₂, t₃, a second time window may have time instances t₄, t₅, t₆ and so on.

The training data set further comprises, for each time window 230 of the set of time windows, a corresponding set of ground-truth keypoints. For each respective time window, the radar signals acquired during said time window are associated with the set of ground-truth keypoints corresponding to said time window. In other words, one ground-truth keypoint representation is attributed to an entire time window 230.

Returning to Figure 1, the data acquisition step 100 may optionally comprise obtaining the sets of ground-truth keypoints by means of light-based camera 140. To this end, the camera 140 may acquire a set of camera images 101 comprising the target object. The ground-truth keypoint representations are determined based on the set of camera images in step 110. This may, for example, be done using any method to obtain a keypoint representation from a regular light-based camera image, for example Nuitrack skeleton tracking if the object is a human. This illustrated by object 150 and corresponding keypoint representation 151. The camera 140 may, for example be an RGBD camera, e.g. a Intel RealSense camera, comprising a light detection and ranging, LiDAR, sensor for obtaining the depth, D, information. The depth information can be used for determining the ground-truth keypoint representations.

As sensors improve in the future, the machine learning model can be easily retrained based on radar signals obtained with a higher angular resolution. This will further increase the accuracy of the keypoint representation estimation as well as the accuracy of the command estimation.

To achieve a high performance of the trained model 160, the camera images are synchronised with the radar signals at the time instances t₁, t₂, t₃, t₄, t₅, t₆, and t₇. Also contributing to a high performance is a spatial synchronisation of the radar sensor of radar antenna 141 with the light-based sensor of camera 140. For example, calibration may be performed between camera 140 and antenna 141. Since the devices 140, 141 need to operate on the same time to obtain synchronised image and radar data, they may not be positioned at exactly the same position. An offset between the sensors may, for example, be in the order of a few centimetres, cm, in both horizontal and vertical directions. In addition, local camera coordinate systems may be rotated with respect to each other. Optionally, periodic recalibration may be performed.

In step 111, raw radar signals 102 obtained by antenna 141 may be further pre-processed to 3D radar point clouds 152. This may help the model 160 to extract more useful feature maps more quickly during training.

It is noted that acquiring the camera images and the radar signals used for training and preparing the training data set may optionally be an integral part of the training method 1. Alternatively, a prepared training data set can simply be applied by the training method.

Next, training data set comprising providing the radar signals 104 labelled with the ground truth sets of keypoints 103, to the model 160. The training data set may, for example, comprise about 24000 radar 3D point clouds 104. Neural networks are known for being data-hungry to obtain an effective training.

Within step 120, training further comprises extracting, by the first neural network 401, for each respective time instance t₁, t₂, t₃, t₄, t₅, t₆, and t₇, a feature 220 from the respective at least one radar signal 210. This is illustrated in Figure 2 by arrows 401. As shown in Figure 2, there is a one-to-one mapping between a time instance and the extracting of a feature map 220. The training method 1 further comprises estimating, by the second neural network 402, for each respective time window 230 a set of keypoints 240 from the respective features 220, 221, 222, 223.

Furthermore, for each of the time windows, a set of training errors is determined in step 120. Therein, a training error comprises a difference between an estimated keypoint and the corresponding ground-truth keypoint. Step 120 further comprises weighting the sets of training errors using first weights. A training error is weighted in function of a radar reflectivity of a part corresponding to the respective estimated keypoint, thereby obtaining weighted training errors.

Step 120 further comprises jointly training the first and second neural networks 401, 402 with the training data set by optimising a loss in function of the weighted training errors. The loss may be a customised Huber loss. The standard Huber loss is described in equation (1) below. Herein, *Y* represents an estimated value, while *Y_{G}* represents a ground-truth, i.e. an observed value. δᵢ represents a threshold value for a training error. The customised Huber loss function is shown in equation (2) below. *wₖ* is a first weight having a value of 2 assigned to key points of arms of a human and 1 for other keypoints, Ø*ᵢ* is a second weight to increase the importance of x and y directions for compensating the outliers. $H \left(Y, {Y}_{G}, {δ}_{i}\right) = \left\{\begin{matrix}\frac{{\left(Y-{Y}_{G}\right)}^{2}}{2} & if \left|Y-{Y}_{G}\right| \leq {δ}_{i} , \\ {δ}_{i} \left|Y-{Y}_{G}\right| - \frac{1}{2} {δ}_{i}^{2} & otherwise ,\end{matrix}\right.$ (1) $L \left(Y, {Y}_{G}\right) = {\sum }_{k = 1}^{19} {w}_{k} \times {\sum }_{i ∈ \left\{x, y, z\right\}} {ϕ}_{i} \times H \left(Y, {Y}_{G}, {δ}_{i}\right)$ (2)

Further, estimated sets of keypoints 105 may be displayed as keypoint representations 170 in step 130.

It is noted that training of the model 160 comprises using the ground-truth sets of keypoints, while no camera images obtained by camera 140 are necessary for inference.

The trained model 160 may achieve a mean per joint position error, MPJPE, of about 4.8%. A joint position error equals a distance between a predicted and a ground-truth keypoint location. The MPJPE is a mean of all joint position errors over all sets of keypoints for a validation data set.

In parallel with the object representation prediction machine learning model 160, a second machine learning model 161 may be trained for estimating a command expressed by the object. The command recognition machine learning model 161 is configured to estimate a command indicated by the object.

The machine learning model 161 may, for example, be a random forest classifier as illustrated in Figure 1. For example, five decision trees may be constructed. A decision tree is a non-parametric supervised learning algorithm, which is here utilised for the classification task of command recognition. In other words, each tree is configured to classify radar signals into one command of an exhaustive list of possible commands. Each decision tree is trained by a recursive, top-down process where the model learns to split data based on features until a stopping criterion is met. The decision trees may be trained on different radar training data and may therefore be slightly different from each other. The random forest classifier may combine estimations by the individual trees to provide one final command estimation. This may, for example, be done by implementing a majority voting scheme.

The training method 1 may further comprise obtaining a command training data set comprising the radar signals 152 of the training data set used for training the model 160. Radar signals acquired at respective one or more time instances t₁, t₂, t₃, t₄, t₅, t₆, and t₇ are further associated with a respective ground-truth command. The method 1 may further comprise estimating, by the model 161, for each said one or more time instances t₁, t₂, t₃, t₄, t₅, t₆, and t₇, a command from the respective radar signals 152, thereby obtaining estimated commands. Further, the method 1 further comprises determining, for each said one or more time instances, a command training error comprising a difference between an estimated command and the corresponding ground-truth command. The method further comprises training the command recognition machine learning model 161 with the command training data set in function of the command training errors. The estimated commands 106 may further be displayed as commands 171 in step 131.

The training of command recognition machine learning model 161 may further comprise performing train-test splitting, i.e. splitting training data into a validation data set and a training data set. Subsequently, K-fold cross validation may be performed, for example by splitting the training data into five data sets. Further, a confusion matrix may be constructed to evaluate the performance of the model 161.

The training data set used for the command estimation training may, for example, comprise diverse movements in a human-robot interaction context. Such movements may include: left-hand wave, right-hand wave, crossing arms, thumbs up et cetera. Long-range gesture recognition may be achieved by including radar signals in the training data set captured at a relatively large distance, for example, at least 3-4 metres. A command recognition accuracy of over 96% may be achieved.

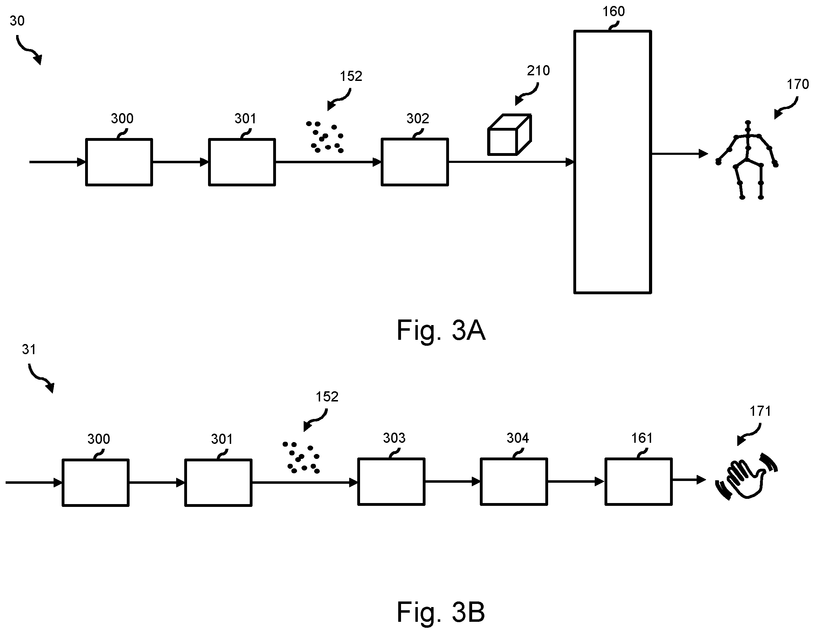

Figure 3A illustrates an inference method 30 for estimating a keypoint representation using object representation prediction model 160. Method 30 comprises parsing 300 radar signals obtained from a radar sensor and further clustering 301 the data. The clustering 301 may, for example, comprise performing density-based spatial clustering of applications with noise, DBSCAN. DBSCAN is a clustering algorithm used in machine learning to partition data into clusters based on their distance to other points. This results in obtaining the radar signals as point clouds 152. Next, voxelisation 302 may be performed before feeding radar signals 210 to model 160. The trained object representation prediction model may then estimate a keypoint representation 170 of the newly acquired radar data. It is noted that the inference can be done either in the same way as the training or other variations may also be possible with regard to the second neural network. For example, training may be performed in other ways than using a sliding window as illustrated above. For example, information of time instances that are not equidistant may be put together into a time window. Inference using a sliding window may, however, result in an improved real-time object representation prediction. As another example, the training may be done using another time window length than during inference. A training time window length may, for example, be larger than an inference time window length. This may allow the training to result in an increased accuracy, while calculation time is shortened during inference. For example, the training may be performed with a time window length of 5 time instances, while inference may be performed with a time window length of 3 time instances.

Figure 3B illustrates an inference method 31 for estimating a command using command recognition model 161. The method 31 comprises the same parsing 300 and clustering 301 steps as method 30 to obtain point clouds 152. Further, the inference method 31 comprises a flattening step 303 to reshape the point cloud 152. Next, the model 161 is applied to estimate the command 171.

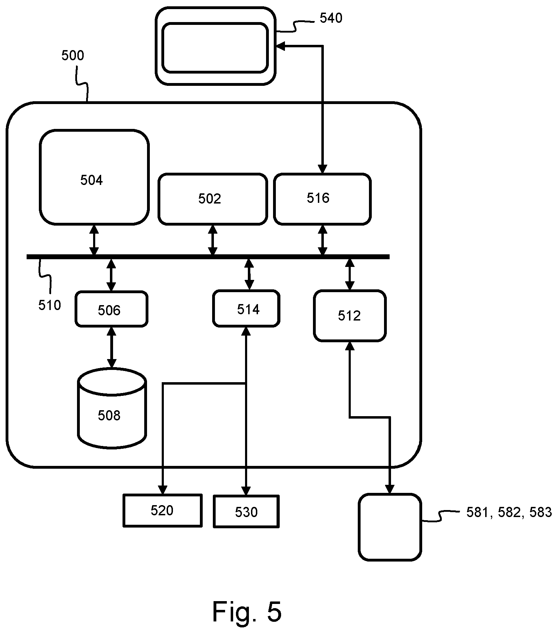

Figure 5 shows a suitable computing system or computer system 500 enabling to implement embodiments according to the second, fourth, fifth, sixth, seventh or eighth aspect. Computing system 500 may in general be formed as a suitable general-purpose computer and comprise a bus 510, a processor 502, a local memory 504, one or more optional input interfaces 514, one or more optional output interfaces 516, a communication interface 512, a storage element interface 506, and one or more storage elements 508. Bus 510 may comprise one or more conductors that permit communication among the components of the computing system 500. For example, the conductors may comprise one or more wireless conductors. Processor 502 may include any type of conventional processor or microprocessor that interprets and executes programming instructions. Local memory 504 may include a random-access memory, RAM, or another type of dynamic storage device that stores information and instructions for execution by processor 502 and/or a read only memory, ROM, or another type of static storage device that stores static information and instructions for use by processor 502. Input interface 514 may comprise one or more conventional mechanisms that permit an operator or user to input information to the computing device 500, such as a keyboard 520, a mouse 530, a pen, voice recognition and/or biometric mechanisms, a camera, etc. Output interface 516 may comprise one or more conventional mechanisms that output information to the operator or user, such as a display 540, etc. Communication interface 512 may comprise any transceiver-like mechanism such as for example one or more Ethernet interfaces that enables computing system 500 to communicate with other devices and/or systems, for example with other computing devices 581, 582, 583. The communication interface 512 of computing system 500 may be connected to such another computing system by means of a local area network, LAN, or a wide area network, WAN, such as for example the internet. Storage element interface 506 may comprise a storage interface such as for example a Serial Advanced Technology Attachment, SATA, interface or a Small Computer System Interface, SCSI, for connecting bus 510 to one or more storage elements 508, such as one or more local disks, for example SATA disk drives, and control the reading and writing of data to and/or from these storage elements 508. Although the storage element(s) 508 above is/are described as a local disk, in general any other suitable computer-readable media such as a removable magnetic disk, optical storage media such as a CD or DVD, read-only memory, ROM, disk, solid state drives, flash memory cards, ... could be used. Computing system 500 could thus be configured to comprise program instructions stored thereon for performing the computer-implemented method according to the first aspect and/or the third aspect.

As used in this application, the term "circuitry" may refer to one or more or all of the following:
(a) hardware-only circuit implementations (such as implementations in only analogue and/or digital circuitry);
(b) combinations of hardware circuits and software, such as (as applicable): (i) a combination of analogue and/or digital hardware circuit(s) with software/firmware and (ii) any portions of hardware processor(s) with software (including digital signal processor(s)), software, and memory/memories that work together to cause an apparatus, such as a mobile phone or server, to perform various functions); and
(c) hardware circuit(s) and or processor(s), such as a microprocessor(s) or a portion of a microprocessor(s), that requires software (e.g. firmware) for operation, but the software may not be present when it is not needed for operation.
This definition of circuitry applies to all uses of this term in this application, including in any claims. As a further example, as used in this application, the term "circuitry" also covers an implementation of merely a hardware circuit or processor (or multiple processors) or portion of a hardware circuit or processor and its (or their) accompanying software and/or firmware. The term "circuitry" also covers, for example and if applicable to the particular claim element, a baseband integrated circuit or processor integrated circuit for a mobile device or a similar integrated circuit in server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A computer-implemented method (1) for training an object representation prediction machine learning model (160) for estimating a keypoint representation (170) of an object that is adapted to be in motion, the object representation prediction machine learning model comprising:
- a first neural network (401) configured to extract a feature from at least one radar signal acquired at a given time instance;
- a second neural network (402) configured to perform a regression analysis on features corresponding to time instances within a time window comprising the given time instance to estimate a set of keypoints characterising the keypoint representation, wherein the keypoints of the set of keypoints correspond to respective parts of the object; and
wherein the computer-implemented method comprises:
- obtaining a training data set (103, 104) comprising:
- for each time instance of a set of time instances, at least one radar signal (210) acquired at said time instance, wherein the at least one radar signal comprises information indicative of a radar reflectivity of the object;
- for each time window of a set of time windows (230, 231, 232), a corresponding set of ground-truth keypoints, wherein each time window comprises a plurality of time instances of the set of time instances;
wherein, for each respective time window, the radar signals acquired during said time window are associated with the set of ground-truth keypoints corresponding to said time window, thereby obtaining the training data set;
- extracting, by the first neural network, for each respective time instance, a feature (220) from the respective at least one radar signal;
- estimating, by the second neural network, for each respective time window, a set of keypoints (240) from the respective features (220, 221, 222, 223), thereby obtaining estimated keypoints characterising the keypoint representation;
- determining, for each of the time windows, a set of training errors, wherein a training error comprises a difference between an estimated keypoint and the corresponding ground-truth keypoint;
- weighting the sets of training errors using first weights, wherein a training error is weighted in function of a radar reflectivity of a part corresponding to the respective estimated keypoint, thereby obtaining weighted training errors; and
- jointly training the first and second neural networks with the training data set by optimising a loss in function of the weighted training errors.

2. The computer-implemented method of claim 1, wherein a training error of a keypoint corresponding to a first part of the object having a lower radar reflectivity than a second part of the object is attributed a heavier first weight than training errors of keypoints corresponding to the second part.

3. The computer-implemented method of claim 1 or 2, further comprising further weighting the sets of training errors using second weights, wherein a training error is weighted in function of an out-of-plane coordinate of the respective estimated keypoint with respect to a detection plane of the at least one received radar signal.

4. The computer-implemented method of claim 3, wherein a training error of a first keypoint having a first out-of-plane coordinate, is attributed a heavier second weight than a training error of a second keypoint having a second out-of-plane coordinate that is larger than the first out-of-plane coordinate.

5. The computer-implemented method according to any one of the preceding claims, wherein the loss is a Huber loss.

6. The computer-implemented method according to any one of the preceding claims, wherein the first neural network is a convolutional neural network, CNN, and, the second neural network is a recurrent neural network, RNN.

7. The computer-implemented method according to claim 6, wherein the RNN comprises a long short-term memory.

8. The computer-implemented method according to any one of the preceding claims, for further training a command recognition machine learning model (161) for estimating a command (171) indicated by the object, wherein the computer-implemented method further comprises:
- obtaining a command training data set comprising the radar signals of the training data set, wherein radar signals acquired at respective one or more time instances are further associated with a respective ground-truth command;
- estimating, by the command recognition machine learning model, for each said one or more time instances, a command from the respective radar signals, thereby obtaining estimated commands;
- determining, for each said one or more time instances, a command training error comprising a difference between an estimated command and the corresponding ground-truth command; and
- training the command recognition machine learning model with the command training data set in function of the command training errors.

9. The computer-implemented method of claim 8, wherein the command recognition machine learning model is a random forest classifier model.

10. A computer-implemented method for estimating a keypoint representation (170) of an object that is adapted to be in motion, wherein the computer-implemented method comprises:
- receiving a set of radar signals of the object, wherein the set of radar signals comprises, for each time instance within a time window, at least one radar signal acquired at said time instance, wherein the at least one radar signal comprises information indicative of a radar reflectivity of the object;
- extracting, by a first neural network (401), for each respective time instance within the time window, a feature (220) from the at least one received radar signal (210); and
- performing, by a second neural network (402), a regression analysis on the features corresponding to the time instances within the time window to estimate a set of keypoints characterising the keypoint representation of the object;
wherein the first and second neural networks are jointly trained by the computer-implemented method according to any one of the preceding claims.

11. The computer-implemented method of claim 10, for further estimating a command given by the object, the computer-implemented method further comprising:
- classifying, by a command recognition machine learning model (161), the radar signals acquired at one or more time instances within the time window of the human to estimate the command,
wherein the command recognition machine learning model is trained by the computer-implemented method according to claim 8 or 9.

12. A dataset processing system (500) comprising at least one processor (502) and at least one memory (504) including computer program code, the at least one memory and computer program code configured to, with the at least one processor, carry out the computer-implemented method according to any one of the preceding claims.

13. A computer program comprising instructions stored thereon for performing at least the computer-implemented method according to any one of claims 1-11.

14. An object representation prediction device comprising at least one trained object representation prediction machine learning model (160) trained according to the computer-implemented method of any one of claims 1-7, wherein each of the at least one trained object representation prediction machine learning model is trained for estimating a keypoint representation of an object of a category by using a training data set comprising radar signals acquired from objects of the category, and wherein the object representation prediction device is configured to:
- control at least one actuator configured to move within an actuation area;
- obtain a set of radar signals, wherein the set of radar signals comprises, for each time instance within a time window, at least one radar signal acquired at said time instance, wherein the at least one radar signal comprises information indicative of a radar reflectivity of an object of a given category within the actuation area;
- estimate, from the set of radar signals, a keypoint representation of the object using the object representation prediction machine learning model trained for the given category; and
- instruct the at least one actuator to interact with the object in function of the estimated keypoint representation of the object.

15. The object representation prediction device according to 14, further comprising a trained command recognition machine learning model (161) trained according to claim 8 or 9, the object representation prediction device being further configured to:
- estimate, from the set of radar signals, a command given by the object using the trained command recognition machine learning model; and
- instruct the at least one actuator to further interact with the object based on the estimated command of the object.
